# EUROPEAN PATENT APPLICATION

(11) **EP 4 516 865 A2**
(43) Date of publication of application: **05.03.2025**
(21) Application number: 25151763.7
(22) Date of filing: 15.06.2017
(51) Int. Cl.: C09D 163/00

(54) **INTUMESCENT COATING COMPOSITION**

(62) Divisional of application: 17913955.5
(71) Applicant: PPG Coatings (kunshan) Co., Ltd., Kunshan, Jiangsu 215331 (CN)
(72) Inventor: WU, Hao, Kunshan, 215331 (CN); ZHU, Luoyi, Kunshan, 215331 (CN); YANG, Lin, Kunshan, 215331 (CN)
(74) Representative: Appleyard Lees IP LLP

(57) **Abstract**

The present invention relates to an intumescent multi-component coating product, methods for using the intumescent multi-component coating product, substrates coated with the intumescent multi-component coating product. The intumescent multi-component coating product of the present invention may have excellent low temperature resistance properties and anti-fire properties.

## Description

### Field of the invention

The present invention relates to an intumescent coating composition (also known as passive fire protection (PFP) coating), an intumescent multi-component coating product, methods for using the intumescent coating composition or the intumescent multi-component coating product, and substrates coated with the intumescent coating composition or the intumescent multi-component coating product.

### Background art

Intumescent coatings are widely used in various aspects of daily life and industry. Intumescent coatings are generally applied to the surface of a substrate to change the flaming characteristics of the surface of the substrate, so as to retard the rapid spread of fire. In industry, intumescent coatings are applied to, for example, construction elements to increase the fire resistance limit of such elements.

Different from the non-intumescent coatings, intumescent coatings can be applied to a substrate at a relatively thinner thickness. When flammable conditions, such as high temperature and oxidative atmosphere, are achieved, intumescent coatings will undergo chemical reactions, expanding and producing char, thereby forming a thick protective layer that is highly heat-insulative on the substrate. Such protective layer has a relatively low thermal conductivity, thereby stopping rapid thermal conduction. Another significant difference is that, intumescent coating cannot comprise much fillers and/or pigments, because these materials will constrain the expanding from occurring.

However, there is still a need for an intumescent coating which can resist low temperature cracking, disintegrated appearance, properties degrading, can maintain proper anti-fire characteristics after subjecting to low temperature, and/or also can be coated at a relatively thinner thickness.

### Summary of Invention

After extensive experiments and continued efforts, the inventors of the present invention have found that the compositions of the present invention can solve the problems in the art as discussed above.

In one aspect, the intumescent coating composition of the present invention comprises a mixture of at least the following components: a) a polymer; b) a curing agent; c) a carbon source; d) a foaming agent; e) an acid source; f) a reinforced fiber; and g) an inorganic additive.

In another aspect, the intumescent multi-component coating product of the present invention comprises: part A) and part B), wherein part A) comprises a polymer and an acid source, and part B) comprises a curing agent and a foaming agent; the intumescent multi-component coating product further comprises a carbon source present in part A) and/or part B), a reinforced fiber present in part A) and/or part B), an inorganic additive present in part A) and/or part B).

Now the present invention will be further illustrated below in a greater detail.

### DETAILED DESCRIPTION OF THE INVENTION

Other than in any operating examples, or where otherwise indicated, all numbers expressing quantities of ingredients, reaction conditions and so forth used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used in this specification and the appended claims, the articles "a," "an," and "the" include plural referents unless expressly and unequivocally limited to one referent. For example, although reference is made to "a" polymer, "a" curing agent", "a" carbon source, "a" foaming agent, "an" acid source, "a" reinforced fiber, "an" inorganic additive, "a" coating composition and the like, one or more of any of these components can be used.

The term "hydrocarbyl" herein refers to a group comprising carbon and hydrogen atoms, wherein one or more of the hydrogen atoms directly bonded with carbon atoms can be replaced, or substituted, by other groups, such as -OH, -SH etc.

The term "long chain hydrocarbon substituent" herein refers to a hydrocarbyl having at least 6 carbon atoms.

The various embodiments and Examples of the present invention set forth herein should not be understood as to limit the scope of the present invention.

The polymer used in the present invention is not particularly limited, it includes, but not limited to, epoxy resins, acrylic resins, polyurethanes, polyureas, polyvinyls, phenolic resins, urea-formaldehyde resins, polyimides, melamine resins, polyester resins and cyanate resins. Among these resins, epoxy resins, acrylic resins and/or polyurethane resin are particularly suitable. The polymer may react with the curing agent, discussed below.

Epoxy resin components comprise at least one polyepoxide. The polyepoxide has at least two 1,2-epoxy groups. Usually the epoxy equivalent weight of the polyepoxide ranges from about 80 to about 2000, typically about 180 to 500. Epoxy compounds can be saturated or unsaturated, cyclic or acylic, aliphatic, alicyclic, aromatic or heterocyclic. They may comprise substituent(s), such as halogen, hydroxy, and ether groups.

The examples of polyepoxides are those having more than 1 or usually about two 1,2-epoxy equivalents; i.e., polyepoxides having two epoxy groups per molecule in average. The most commonly used polyepoxides are, for example, polyglycidyl ether of polyphenols, such as 2,2-bis(4-hydroxyphenyl)propane (bisphenol A), resorcinol, hydroquinone, benzenedimethol, phloroglucinol, and catechol; or polyglycidyl ether of polyols, such as alicyclic polyols, such as 1,2-cyclohexane diol, 1,4-cyclohexane diol, 2,2-bis(4- hydroxycyclohexyl)propane, 1,1-bis(4-hydroxycyclohexyl)ethane, 2-methyl-1,1-bis(4- hydroxycyclohexyl)propane, 2,2-bis(4-hydroxy-3-tert-butylcyclohexyl)propane, 1,3-bis(hydroxymethyl)cyclohexane and 1,2-bis(hydroxymethyl)cyclohexane. The examples of aliphatic polyols include, in particular, trihydroxymethylpentane diol and neopentane diol.

A particular suitable polyepoxide has an epoxy equivalent weight of less than 200 g/equivalent. The example includes EPON 828, which is commercially available from Hexion Inc.

The acrylic resins used in the present invention include copolymers of one or more alkyl esters of acrylic acid or methacrylic acid, optionally together with one or more other polymerizable ethylenically unsaturated monomers. Useful alkyl esters of acrylic acid or methacrylic acid include aliphatic alkyl esters containing from 1 to 30, and such as 4 to 18 carbon atoms in the alkyl group. Non-limiting examples include methyl methacrylate, ethyl methacrylate, butyl methacrylate, ethyl acrylate, butyl acrylate, and 2-ethyl hexyl acrylate. Suitable other copolymerizable ethylenically unsaturated monomers include vinyl aromatic compounds such as styrene and vinyl toluene; nitriles such as acrylonitrile and methacrylonitrile; vinyl and vinylidene halides such as vinyl chloride and vinylidene fluoride and vinyl esters such as vinyl acetate.

The acrylic copolymers can include hydroxyl functional groups, which are often incorporated into the polymer by including one or more hydroxyl functional monomers in the reactants used to produce the copolymer. Useful hydroxyl functional monomers include hydroxyalkyl acrylates and methacrylates, typically having 2 to 4 carbon atoms in the hydroxyalkyl group, such as hydroxyethyl acrylate, hydroxypropyl acrylate, 4-hydroxybutyl acrylate, hydroxy functional adducts of caprolactone and hydroxyalkyl acrylates, and corresponding methacrylates, as well as the beta-hydroxy ester functional monomers described below. The acrylic polymer can also be prepared with N-(alkoxymethyl) acrylamides and N-(alkoxymethyl) methacrylamides.

Beta-hydroxy ester functional monomers can be prepared from ethylenically unsaturated, epoxy functional monomers and carboxylic acids having from 5 to 20 carbon atoms, or from ethylenically unsaturated acid functional monomers and epoxy compounds containing at least 5 carbon atoms which are not polymerizable with the ethylenically unsaturated acid functional monomer.

The polymer used in the present invention can also be a polyurethane. Among the polyurethanes which can be used are polymeric polyols which are prepared by reacting polyester polyols or acrylic polyols such as those mentioned above with a polyisocyanate such that the OH/NCO equivalent ratio is greater than 1:1 so that free hydroxyl groups are present in the product.

Additional examples of polyurethane polymers suitable for forming the active hydrogencontaining, cationic polymer include the polyurethane, polyurea, and poly(urethane-urea) polymers prepared by reacting polyether polyols and/or polyether polyamines with polyisocyanates. Such polyurethane polymers are described in U.S. Patent No. 6,248,225.

In the intumescent coating composition of the present invention, the amount of the polymer is typically 10-40 wt%, based on the total weight of the intumescent coating composition, such as 15-38 wt%, 22-36 wt%, or 23-30 wt%. Alternatively, the amount of the polymer in the coating composition of the present invention may be 10, 11, 12, 13, 14, 15, 16, 17, 18, 19 wt% to 30, 31, 32, 33, 34, 35, 36, 37, 38, 39, 40 wt%. The endpoints of the above ranges can be arbitrarily combined to define the amount of the polymer in the intumescent coating composition of the present invention.

There is no particular limit to the curing agent used in the present invention, as long as it can react with the polymer used in the present invention and cure it. Suitable curing agents include amines, polyamides, polyepoxides, polyetheramines and polyols, etc.

Amine curing agent is an organic polyamine compound widely used for epoxy resins, acrylic resins and polyurethane resins. Specific amine curing agents include polyamine, and examples thereof include, but are not limited to, diethylene triamine, triethylene tretraamine, tetraethylene pentamine, isophorone diamine, metaxylylene diamine, metaphenylene diamine, 1,3-bis(aminoethyl)cyclohexane, bis(4-aminocyclohexyl)methane, N-aminoethyl piperazine, 4,4'-diaminodiphenyl methane, 4,4'-diamino-3,3'-diethyl diphenyl methane and diamino diphenylsulphone. Commercial grade products of these polyamine curing agents can be used.

In addition, adducts of any above polyamines can also be used. The adduct of polyamine is formed by reacting polyamine with a suitable reactive compound, such as an epoxy resin. This reaction will decrease the content of free amine in the curing agent, making it more useful at low temperature and/or high humidity environment.

As a curing agent, various polyetheramines, such as various Jeffamines available from Huntsman Corp., including, but not limited to, Jeffamine 600, Jeffamine 1000, Jeffamine 2005 and Jeffamine 2070, and etc, can also be used.

As a curing agent, various polyamides can also be used. Generally, polyamides contain reaction products of dimer fatty acid and polyethyleneamine, and small amount of monomer fatty acid. Dimer fatty acid is prepared by the oligomerization of monomer fatty acid. Polyethyleneamine can be any higher polyethyleneamine, such as diethylenetriamine, triethylenetetraamine, tetraethylenepentaamine, etc., wherein the most commonly used is diethylenetriamine. When polyamides are used as the curing agent, it can make the coating have a good balance between corrosion resistance and waterproof property. Further, polyamides can also make the coating have good flexibility, proper curing rate and other advantageous factors.

In the intumescent coating composition of the present invention, the amount of the curing agent is typically 10-30 wt%, based on the total weight of the intumescent coating composition, such as 15-20 wt%, 16-19 wt%, or 17-19 wt%. Alternatively, the amount of the curing agent in the coating composition of the present invention may be 10, 11, 12, 13, 14 or 15 wt% to 18, 19, 20, 21, 22, 23, 24 or 25 wt%. The endpoints of the above ranges can be arbitrarily combined to define the amounts of various curing agents in the intumescent coating composition of the present invention.

The intumescent coating composition of the present invention can also comprise a curing promoter. A curing promoter is a kind of material which can accelerate the curing of the resins, lower the curing temperature, shorten the curing time. Typical curing promoters include aliphatic amine promoters, such as triethanolamine, triethylenediamine, etc.; anhydride promoters, such as BDMA, DBU, etc.; polyetheramine catalysts; tin promoters, such as dibutyltin dilaurate, stannous octoate, etc. In one embodiment of the present invention, the curing promoter is ANCAMINE K54, which is commercially available from Air Products.

In the intumescent coating composition of the present invention, the amount of the curing promoter is 2-5 wt%, such as 2-3 wt%, based on the total weight of the intumescent coating composition.

The intumescent coating composition of the present invention further comprises a carbon source. The carbon source transforms into char upon exposure to fire or heat, thereby forming an anti-fire protective layer on the substrate. According to the present invention, carbon sources can be, for example, aromatic compounds and/or tall oil fatty acids (TOFA). The inventors of the present invention have surprisingly found that when carbon sources including aromatic compounds and/or tall oil fatty acids are used as the carbon source in intumescent coating composition of the present invention, the resultant intumescent coating will not only have comparable or even better anti-fire properties than the similar type of intumescent coatings, but can also maintain these required properties after undergone low temperatures. It will also be appreciated that the polymer may also be a carbon source.

The aromatic compound used in the present invention comprises at least one aromatic ring, such as 2, 3, or 4 aromatic rings. The aromatic ring can be, for example, benzene ring, naphthalene ring, anthracene ring, or phenanthrene ring. The aromatic compound used in the present invention may comprise at least one functional substituent, such as hydroxy, carboxy, mercapto, amino, etc., which may directly attached to the aromatic ring.

The aromatic compound used in the present invention may include bisphenol compounds and aromatic compounds having a long chain hydrocarbyl substituent.

In particular, the bisphenol compounds that can be used in the present invention include, but not limited to, one or more of bisphenol A, bisphenol B and bisphenol F.

An aromatic compound having a long chain hydrocarbyl substituent may be used as the carbon source. The aromatic compound having a long chain hydrocarbyl substituent used in the present invention comprises at least one aromatic ring, such as 2, 3, 4 aromatic rings. The aromatic ring may be for example benzene ring, naphthalene ring, anthracene ring, phenanthrene ring, wherein benzene ring is particularly suitable. The term "long chain hydrocarbon substituent" herein refers to a hydrocarbyl having at least 6 carbon atoms. Since the aromatic compound having a long chain hydrocarbon substituent can produce more chars upon exposure to fire or heat, they are particularly suitable for use in the present invention. The long chain hydrocarbon substituent may be a saturated or unsaturated hydrocarbyl.The long chain hydrocarbyl can be a linear or branched alkyl and/or alkenyl and/or alkynyl having 6 to 20 carbon atoms. For example, the long chain hydrocarbyl can have 6 to 18 carbon atoms, or 6 to 15 carbon atoms. The long chain hydrocarbyl can have 6, 7, 8, 9, 10, 11, 12, 13, 14, 15, 16, 17, 18, 19 or 20 carbon atoms. The long chain hydrocarbyl can comprise 1 to 3 unsaturated bonds, such as double bond and acetylenic bond. In one embodiment of the present invention, the long chain hydrocarbyl substituent comprises 1 to 3 double bonds. For example, the long chain hydrocarbyl substituent may be, such as, a long chain hydrocarbyl substituent of 6 to 20 carbon atoms having 1, 2 or 3 double bonds, a long chain hydrocarbyl substituent of 6-20 carbon atoms having 1 or 2 double bonds, a long chain hydrocarbyl of 6-15 carbon atoms having 1 or 2 or 3 double bonds, or a long chain hydrocarbyl of 6-15 carbon atoms having 1 or 2 double bonds. The aromatic compound having a long chain hydrocarbyl substituent used in the present invention may comprise at least one functional substituent, such as hydroxy, carboxy, mercapto, amino, etc. The at least one functional substituent may be attached directly to the aromatic ring and/or to the long chain hydrocarbon substituent. In other words, the aromatic compound having a long chain hydrocarbyl substituent used in the present invention may be an aromatic compounds having a long chain hydrocarbyl substituent substituted with a functional substituent, such as, a phenol having a long chain hydrocarbon substituent, a hydroquinone (including ortho-, meta-, and para-positions) having a long chain hydrocarbon substituent; a benzoic acid having a long chain hydrocarbon substituent; a phthalic acid having a long chain hydrocarbon substituent (including ortho-, meta-, and para-positions); an aniline having a long chain hydrocarbon substituent, a benzene diamine having a long chain hydrocarbon substituent (including ortho-, meta-, and para-positions), etc.

In the intumescent coating composition of the present invention, the amount of the carbon source can be up to 18 wt%, based on the total weight of the intumescent coating composition, such as 10-18 wt%, 11-17 wt%, or 12-16 wt%. Alternatively, the amount of the carbon source in the coating composition of the present invention can be 10, 11, 12, 13 wt% to 15, 16, 17, 18 wt%. The endpoints of the above ranges can be arbitrarily combined to define the amounts of various carbon sources in the intumescent coating composition of the present invention.

The aromatic compound having a long chain hydrocarbyl substituent may be cardanol. Cardanol is a beneficial ingredient extracted from cashew shell, which can have, for example, the following structure.

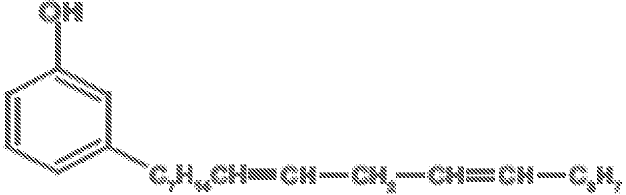

At present, cardanol can replace or partially replace phenol for making epoxy resins and phenolic resins, etc. in the field of coatings. As a novel resin modifier and accelerator of low viscosity and multi-purpose, cardanol has been extensively used in the applications including maritime corrosion protection, and flooring coating. As cardanol has advantages such as low toxicity, low volatility and light color, and is derived from natural source, it is a desirable reproducible and non-food material, and therefore has a wide useful prospect. The inventors of the present invention have surprisingly found that when cardanol is used as the carbon source in the intumescent coating of the present invention, the resultant intumescent coating can achieve excellent anti-fire properties, as well as maintaining these required properties after having undergone low temperature.

There are many cardanol commercial products useful in the present invention. Representative commercial products include, but not limited to, Cardolite NX-4708, which is commercially available from Cardolite Corp.; and Cardanol products from HDSG Beijing Technology Co., Ltd., etc.

In the intumescent coating composition of the present invention, the amount of cardanol can be up to 18 wt%, based on the total weight of the intumescent coating composition, such as 10-18 wt%, 11-17 wt%, or 12-16 wt%. Alternatively, the amount of cardanol in the coating composition of the present invention can be 10, 11, 12, 13 wt% to 15, 16, 17, 18 wt%. The endpoints of the above ranges can be arbitrarily combined to define the amount of cardanol in the intumescent coating composition of the present invention.

Another exemplary carbon source useful in the present invention is tall oil fatty acids (TOFA). TOFA primarily is a mixture of oleic acid, linoleic acid and the isomers thereof. It is insoluble in water, but soluble in diethyl ether and ethanol. The grade of a tall oil fatty acid is determined mainly on the amounts of rosin acids and unsaponifiables, color and color stability. TOFA is derived from woods used in paper making process, wherein fatty acids and rosin acids are solved in base liquid in the form of hard soap so as to obtain "black liquid soap", which is further treated with acids to yield crude tall oil fatty acids. Crude tall oil fatty acids can be converted into refined tall oil fatty acids through further distillation, etc.

There are many commercial products of tall oil fatty acids useful in the present invention. Representative commercial products include, but not limited to, SYLFAT^{™} series, which are commercially available from Arizona Chemical Co., including SYLFAT^{™} 2, SYLFAT^{™} 2C, SYLFAT^{™} FAl and SYLFAT^{™} FA2, etc.

In the intumescent coating composition of the present invention, the amount of the tall oil fatty acid is up to 18 wt%, based on the total weight of the intumescent coating composition, such as 10-18 wt%, 11-17 wt%, or 12-16 wt%. Alternatively, the amount of the tall oil fatty acid in the coating composition of the present invention is 10, 11, 12, 13 wt% to 15, 16, 17, 18 wt%. The endpoints of the above ranges can be arbitrarily combined to define the amount of the tall oil fatty acid in the intumescent coating composition of the present invention.

The intumescent coating composition of the present invention comprises intumescent agent (also known as foaming agent). Intumescent agent will produce nonflammable gases, generally nitrogen, when exposed to fire or heat. The produced gases will expand the char derived from the carbon source, forming a foam-like protective layer. The intumescent agent useful in the present invention includes, but is not limited to, melamines and boron containing compounds.

Melamines intumescent agents useful in the present invention include, but not limited to, melamine and melamine derivatives. Melamine derivatives are well known in the art can include, such as, salts of melamine, such as melamine cyanurate, melamine formaldehyde, hydroxymethylated melamine, hexmethoxymethyl melamine, melamine monophosphorate, di(melamine phosphorate), melamine dihydric phosphorate, etc.

Boron containing compounds useful as an intumescent agent in the present invention include, but are not limited to, boric acid, and borates, such as ammonium pentaborate, zinc borate, sodium borate, lithium borate, aluminum borate, magnesium borate and borosilicate.

In the intumescent coating composition of the present invention, the amount of the intumescent agent is typically 5-30 wt%, based on the total weight of the intumescent coating composition, such as 5-20 wt%, 5-15 wt%, or 5-10 wt%. Alternatively, the amount of the intumescent agent in the coating composition of the present invention may be 5, 6, 7, 8, 9 or 10 wt% to 15, 16, 17, 18, 19 or 20 wt%. The endpoints of the above ranges can be arbitrarily combined to define the amount of the intumescent agent in the intumescent coating composition of the present invention.

The intumescent coating composition of the present invention comprises acid source. The acid source will produce acid(s) when the coating of the present invention is exposed to fire or heat. Suitable acid source includes, but not limited to, phosphorus containing acid source and sulphur containing acid source. The phosphorus containing acid source includes phosphorates, such as sodium phosphorate, potassium phosphorate or ammonium phosphorate, ammonium polyphosphorate (APP), monoammonium phosphorate, diammonium phosphorate, trichloroethyl phosphate (TCEP), trichloropropyl phosphate (TCPP), ammonium pyrophosphorate, triphenyl phosphate, etc. Sulphur containing acid source includes sulfonates, such as sodium sulfonate, potassium sulfonate or ammonium sulfonate, paratoluene sulfonate, sulphates, such as sodium sulphate, potassium sulphate or ammonium sulphate.

In the intumescent coating composition of the present invention, the amount of the acid source is typically 5-30 wt%, based on the total weight of the intumescent coating composition, such as 5-25 wt%, 5-20 wt%, or 5-15 wt%. Alternatively, the amount of the acid source in the coating composition of the present invention may be 5, 6, 7, 8, 9 or 10 wt% to 15, 16, 17, 18, 19, 20 wt%. The endpoints of the above ranges can be arbitrarily combined to define the amount of the various acid sources in the intumescent coating composition of the present invention.

Alternatively or in addition, the boron containing compound can function as both the intumescent agent and the acid source in the intumescent coating composition of the present invention. In that case, the amount of the boron containing compound is typically 10-60 wt%, based on the total weight of the intumescent coating composition, such as 10-40 wt%, 10-30 wt%, or 10-20 wt%. Alternatively, the amount of the boron containing compound in the coating composition of the present invention may be 10, 11, 12, 13, 14 or 15 wt% to 25, 26, 27, 28, 29 or 30 wt%. The endpoints of the above ranges can be arbitrarily combined to define the amount of the boron containing compound in the intumescent coating composition of the present invention. For example, ammonium penta-borate may, upon heating, contribute both an acid source (boric acid) and may also contribute to the charring process.

The intumescent coating composition of the present invention comprises one or more of reinforced fibers. The fibers useful in the intumescent coating composition of the present invention include, but are not limited to, inorganic fibers and organic fibers. Typical inorganic fibers include: carbide fibers, such as boron carbide fibers, silicon carbide fibers, niobium carbide fibers, etc.; nitride fibers, such as silicon nitride fibers; boron containing fibers, such as boron fibers, boride fibers; silicon containing fibers, such as silicon fibers, alumina-boron-silica fibers, E-glass (non-base aluminum borates) fibers, C-glass (non-base or low base sodalime-aluminumborosilicate) fibers, A-glass (base -sodalime-silicate) fibers, S-glass fibers, inorganic glass fibers, quartz fibers, etc. The glass fibers may include E-glass fibers, C-glass fibers, A-glass fibers, S-glass fibers, etc.

Useful inorganic fibers also include ceramic fibers. Ceramic fibers are also known as aluminum silicate fibers, because one of their main ingredients is alumina, and alumina in turn is the main ingredient of ceramics, therefore they are called ceramic fibers. The addition of zirconium oxide or chromium oxide can further increase the use temperature of the ceramic fibers. The ceramic fibers have light weight, high temperature resistance, good thermostability, and low thermoconductivity, and can be used in various environments involving high temperature, high pressure and/or erosion.

Useful inorganic fibers also include basalt fibers. Basalt fibers are basalt rock continuous fibers which are made by rapid drawing through a platinum-rhodium alloy wire drain board upon melt at 1450 °C to 1500 °C, and they have a high strength which is comparable to S-glass fibers.

In the intumescent coating composition of the present invention, the amount of the reinforced fiber is typically up to 5 wt%, based on the total weight of the intumescent coating composition, such as up to 4 wt%, up to 3 wt%, or up to 2 wt%. Alternatively, the amount of the reinforced fiber in the coating composition of the present invention may be 1 or 2 wt% to 3, 4 or 5 wt%. The endpoints of the above ranges can be arbitrarily combined to define the amounts of various reinforced fibers in the intumescent coating composition of the present invention.

The intumescent coating composition of the present invention comprises one or more of inorganic additives. The inorganic additive comprises, but is not limited to, APB, ZB, alumina, magnesium oxide, aluminum hydroxide, magnesium hydroxide and inorganic boron compound. The inorganic boron compound useful in the present invention comprises, but is not limited to, boric acid, and borates, such as ammonium pentaborate, zinc borate, sodium borate, lithium borate, aluminum borate, magnesium borate and borosilicate.

In the intumescent coating composition of the present invention, the amount of the inorganic additive is typically 15 wt%-40 wt%, based on the total weight of the intumescent coating composition, such as 15 wt%-35 wt%, 15 wt%-30 wt%, or 15 wt%-25 wt%. Alternatively, the amount of the inorganic additive in the coating composition of the present invention can be 15, 16, 17, 18, 19, 20, 21, 22, 23 or 24 wt% to 31, 32, 33, 34, 35, 36, 37, 38, 39 or 40 wt%. The endpoints of the above ranges can be arbitrarily combined to define the amount of the inorganic additive in the intumescent coating composition of the present invention.

The intumescent coating composition of the present invention may further comprise additional one or more optional ingredients and/or additives, such as solvent, other curing catalysts, pigments or other colorants, reinforcements, thixotropes, accelerators, surfactants, plasticizers, extenders, stabilizers, corrosion inhibitors, diluents, hindered amine light stabilizers, UV light absorbers, adhesion promoters, and antioxidants. Alternatively, the above ingredients and/or additives also can be used to form a mixture comprised in the intumescent coating composition of the present invention with other components in the intumescent coating composition of the present invention.

The intumescent coating composition of the present invention can be prepared through any method well known to a person skilled in the art. In the method for preparing the coating composition of the present invention, the above components can be mixed at desired ratios. In one embodiment, the above components are sequentially added into a container, and then stirred until even. There is no particular limitation on the addition order for the components.

The present invention also relates to an intumescent multi-component coating product, wherein the intumescent multi-component coating product of the present invention comprises: part A) and part B), wherein part A) comprises a polymer and acid source, and part B) comprises curing agent and foaming agent; the intumescent multi-component coating product further comprises a carbon source present in part A) and/or part B), a reinforced fiber present in part A) and/or part B), an inorganic additive present in part A) and/or part B). The description and illustration for each of the components set for above are also applicable to each of the components in the intumescent multi-component coating product of the present invention. For example, the above recited amounts of each of the components in the intumescent coating composition of the present invention are also applicable to the corresponding components in the intumescent multi-component coating product of the present invention, but the basis is the total weight of the combination product. As known in the art, this combination product is sometimes called as two-component or "2K" coating. However, the intumescent multi-component coating product of the present invention is not limited to only comprise part A) and part B), it can further comprise additional one or more parts comprising other components.

Optionally, the intumescent multi-component coating product of the present invention can additionally include a variety of optional ingredients and/or additives, such as solvent, other curing catalysts, pigments or other colorants, reinforcements, thixotropes, accelerators, surfactants, plasticizers, extenders, stabilizers, corrosion inhibitors, diluents, hindered amine light stabilizers, UV light absorbers, adhesion promoters, and antioxidants. A person skilled in the art can know that these optional ingredients and/or additives can present in part A) and/or part B) and/or further optional one or more parts in the intumescent multi-component coating product of the present invention.

The intumescent coatings obtained by applying the coating composition and/or the product of the present invention may have good low temperature resistance properties, while having excellent anti-fire properties. In addition, the coatings obtained by applying the coating composition and/or product of the present invention may also have a good weather resistance, can be used alone, i.e. without adding any topcoat, to meet the requirements under NORSOK M501.

The present invention further relates to a coated substrate, wherein the substrate comprises have at least one coatable surface and the intumescent coating composition of the present invention and/or the intumescent multi-component coating product of the present invention is applied on the at least one surface of the substrate.

Suitable substrates include rigid metal substrates such as ferrous metals, aluminum, aluminum alloys, copper, and other metal and alloy substrates. The ferrous metal substrates used in the practice of the present invention may include iron, steel, and alloys thereof. Non-limiting examples of useful steel materials include cold rolled steel, galvanized (zinc coated) steel, electrogalvanized steel, stainless steel, pickled steel, zinc-iron alloy such as GALVANNEAL, and combinations thereof. Combinations or composites of ferrous and nonferrous metals can also be used. The substrate according to the present invention may comprise a composite material such as a plastic or a fiberglass composite.

Before depositing any coating compositions upon the surface of the substrate, it is common practice, though not necessary, to remove foreign matter from the surface by thoroughly cleaning and degreasing the surface. Such cleaning typically takes place after forming the substrate (stamping, welding, etc.) into an end-use shape. The surface of the substrate can be cleaned by physical or chemical means, such as mechanically abrading the surface or cleaning/degreasing with commercially available alkaline or acidic cleaning agents which are well known to those skilled in the art, such as sodium metasilicate and sodium hydroxide. A non-limiting example of a cleaning agent is CHEMKLEEN 163, an alkaline-based cleaner commercially available from PPG Industries, Inc.

Following the cleaning step, the substrate may be rinsed with deionized water, with a solvent, or an aqueous solution of rinsing agents in order to remove any residue. The substrate can be air dried, for example, by using an air knife, by flashing off the water by brief exposure of the substrate to a high temperature or by passing the substrate between squeegee rolls.

The substrate may be a bare, cleaned surface; it may be oily, pretreated with one or more pretreatment compositions, and/or prepainted with one or more coating compositions, primers, topcoats, etc., applied by any method including, but is not limited to, electrodeposition, spraying, dip coating, roll coating, curtain coating, and the like.

The present invention also relates to methods for applying the coating composition or the coating combination product of the present invention. The method using the coating composition of the present invention comprises mixing components a) to g) to obtain a coating mixture, and then applying the coating mixture to a substrate. The method for using the coating combination product of the present invention comprises mixing part A) and part B) to obtain a coating mixture, and then applying the coating mixture to a substrate.

The coating composition of the present invention can be applied to a substrate by one or more of numerous methods, which include spaying coating, dip coating/impregnation, brush coating or flow coating, but most often spaying coating. General spaying coating techniques and devices and manual or automatic methods for pneumatic spaying coating and static spaying coating can be used. Coating layers typically have a film thickness of 0.1 to 20mm, such as 0.5 to 20 mm, 0.5 to 18 mm, or 0.8 to 16 mm. Alternatively, the coating composition of the present invention can have a coating thickness of 0.1, 0.2, 0.3, 0.4, 0.5, 0.6, 0.7, 0.8 or 0.9 mm to 10, 11, 12, 13, 14, 15, 16, 17, 18, 19 or 20 mm. Alternatively, the coating composition of the present invention can have a coating thickness of 1, 2, 3, 4, 5 or 6 mm to 10, 11, 12, 13, 14, 15, 16, 17, 18, 19 or 20 mm. The endpoints of the above ranges can be arbitrarily combined to define the coating thicknesses of the intumescent coating compositions of the present invention on a coated substrate to which they were applied.

The present invention also relates to the use of a carbon source in improving the low temperature resistance properties of intumescent coating compositions, wherein the carbon sources are as discussed above.

### Anti-fire property test

The anti-fire property test of the intumescent coating composition of the present invention was carried out as follows. The intumescent coating composition of the present invention was applied on a substrate, and then cured at room temperature for 24 to 48 hours. Next, the coating formed by the intumescent coating composition of the present invention was subjected to a anti-fire test in accordance with a heating cure in UL 1709 Standard, the entire content of this Standard is hereby incorporated into the herein by reference.

The following Examples are intended to illustrate the various the present invention, but should not be construed in any way to limit the present invention.

### Examples

The preparation of the intumescent coating composition:
The intumescent coating compositions of the present invention and the comparative intumescent coating compositions were respectively formulated in beakers by the components and weights listed in Table 1 below, wherein Sample 1 is a comparative intumescent coating composition, Samples 2 and 3 are intumescent coating compositions of the present invention.

**Table 1**

| Components | Sample 1 | Sample 2 | Sample 3 |
|---|---|---|---|
| Epon 828, Hexion | 25.1 | 25.1 | 25.1 |
| Ancamide 375A(polyamide C18 AHEW), Air Products | 18.4 | 18.4 | 18.37 |
| APP, CLARIANT CORPORATION | 6.3 | 6.2 | 6.3 |
| Melamine, OCI Nitrogen | 9 | 9 | 9 |
| Ammonium pentaborate (TECH. POWDER), RIO TINTO MINERALS | 25 | 25 | 25 |
| Ancamide K54, 2,4,6-tri(dimethylaminomethyl)benzene, Air Products | 2.3 | 2.3 | 2.3 |
| TCPP, ICL-IP AMERICA INC. | 5.2 | 5.0 | 5.2 |
| Cardanol, Cardolite NX-4708, Cardolite Corp. | 0 | 13.0 | 0 |
| Tall oil fatty acids, SYLFAT^{™} 2, Arizona Chemical Co. | 0 | 0 | 13.0 |

### Low temperature crack resistance property test:

A T-shape steel having a length of 400 mm, a width of 120 mm, a height of 120 mm, and a thick of 3.5 mm was used as the testing piece. The T-shape steel's surface was sand blasted and coated with an epoxy zinc rich primer. Then the intumescent coating Samples 1-3 as prepared above and commercial Products 1 (Chartek 1709), 2 (Chartek 7) and 3 (Jotachar 750) (each from AkzoNobel, AkzoNobel, Jotun respectively) were respectively coated on the surface of the T-shape steel at a film thickness of 15 mm. The thus prepared T-shape steels were left at room temperature for curing for 24 hours, and then at 60 °C for 4 hours. Then the testing pieces were subjected to 40 cycles of the following frozen cycles: in a refrigerator at -20 °C for 12 hours; then removing from the refrigerator and immediately putting into an oven at 40°C for 12 hours.

After each cycle, the condition of the surface of each of the coated Samples was visually observed, and the number of undergone cycles before coating crack and/or releasing from the substrate was found for each coated Sample was recorded, and the results were reported in Table 2 below. Pass means there is no paint film cracking and no release from the substrate after 40 cycles. It is noted that, when the number of cycles was reported as 40, it means the coated Sample had already undergone 40 frozen cycles without coating cracking and/or release from the substrate and the test ceased at this time.

**Table 2**

| | Sample 1 | Sample 2 | Sample 3 | Commercial Product 1 | Commercial Product 2 | Commercial Product 3 |
|---|---|---|---|---|---|---|
| Number of cycles | 1 | 40 | 40 | 2 | 2 | 1 |

The above results show that the intumescent coating compositions of the present invention have unexpected excellent low temperature resistance properties and can undergo at least 40 frozen cycles.

### Pool fire Resistance Property Test

### Firing test

The above prepared intumescent coating Samples 1-3 were coated on a two-feet W10X49 steel at 3 mm film thickness, and cured at room temperature for 48 hours, and then subjected to firing test. Pool fire tests were carried out on Samples by the heating curve in UL1709. When the steel temperature reached 538 °C, the time passed was recorded, and the results were reported in Table 3 below as Protection period.

**Table 3**

| | Sample 1 (comparative) | Sample 2 | Sample 3 |
|---|---|---|---|
| Protection period (min) | 15 | 29 | 32 |

According to the results reported in Table 3 above, the intumescent coating compositions of the present invention have comparable, or even better, anti-fire properties with the prior art intumescent coatings.

Whereas particular embodiments of this invention have been described above for purposes of illustration, it will be evident to those skilled in the art that numerous variations of the details of the present invention may be made without departing from the scope of the invention as defined in the appended claims.

The invention includes the following aspects:
Aspect 1. An intumescent coating composition, comprising a mixture of at least the following components:
   a) a polymer;
   b) a curing agent;
   c) a carbon source comprising an aromatic compound and/or tall oil fatty acid;
   d) a foaming agent;
   e) an acid source;
   f) a reinforced fiber; and
   g) an inorganic additive.
Aspect 2. The intumescent coating composition according to aspect 1, wherein the inorganic additive comprises alumina, magnesium oxide, alumnium hydroxide, magnesium hydroxide and/or inorganic boron compound.
Aspect 3. The intumescent coating composition according to aspect 1, wherein the polymer comprises one or more of the following:
   epoxy resins, acrylic resins, polyurethanes, polyureas, polyvinyls, phenolic resins, urea-formaldehyde resins, polyimides, melamine resins, polyester resins and cyanate resins.
Aspect 4. The intumescent coating composition according to aspect 1, wherein the curing agent comprises one or more of amines, amine adducts, polyamides, polyepoxides, polyetheramines and polyols.
Aspect 5. The intumescent coating composition according to aspect 1, wherein the aromatic compound comprises bisphenol compounds and/or an aromatic compound having a long chain hydrocarbyl substituent.
Aspect 6. The intumescent coating composition according to aspect 5, wherein the bisphenol compounds comprises bisphenol A, bisphenol B and/or bisphenol F.
Aspect 7. The intumescent coating composition according to aspect 5, wherein the long chain hydrocarbyl in the aromatic compound having a long chain hydrocarbyl substituent is a long chain hydrocarbyl of 6 to 20 carbon atoms having 1, 2 or 3 double bonds.
Aspect 8. The intumescent coating composition according to aspect 7, wherein the aromatic compound having a long chain hydrocarbyl substituent is substituted at the aromatic ring thereof by at least one functional group comprising hydroxy, carboxy and/or amino.
Aspect 9. The intumescent coating composition according to aspect 5, wherein the aromatic compound having a long chain hydrocarbyl substituent is cardanol.
Aspect 10. The intumescent coating composition according to aspect 1, wherein the foaming agent comprises melamine, melamine derivatives, dicynodiamide and/or urea.
Aspect 11. The intumescent coating composition according to aspect 1, wherein the acid source comprises ammonium polyphosphate, trichloroethyl phosphate, trichloropropyl phosphate, melamine pyrophosphate and/or triphenyl phosphate.
Aspect 12. The intumescent coating composition according to aspect 1, wherein the reinforced fiber comprises mineral fibers, ceramic fibers, glass fibers, carbon fibers and/or basalt fibers.
Aspect 13. The intumescent coating composition according to aspect 1, further comprising a curing promoter.
Aspect 14. The intumescent coating composition according to anyone of aspects 1-13, wherein the a) polymer comprises 10 wt%-40 wt%, based on the total weight of the composition.
Aspect 15. The intumescent coating composition according to anyone of aspects 1-13, wherein the b) curing agent comprises 10 wt%-30 wt%, based on the total weight of the composition.
Aspect 16. The intumescent coating composition according to anyone of aspects 1-13, wherein the c) carbon source comprises up to 18 wt%, based on the total weight of the composition.
Aspect 17. The intumescent coating composition according to anyone of aspects 1-13, wherein the d) foaming agent comprises 1 wt%-10 wt%, based on the total weight of the composition.
Aspect 18. The intumescent coating composition according to anyone of aspects 1-13, wherein the e) acid source comprises 5 wt%-30 wt%, based on the total weight of the composition.
Aspect 19. The intumescent coating composition according to anyone of aspects 1-13, wherein the f) reinforced fiber comprises up to 5 wt%, based on the total weight of the composition.
Aspect 20. A multi-component intumescent coating product, comprising:
   part A) and part B), wherein
   part A) comprises a polymer and acid source,
   part B) comprises a curing agent and a foaming agent;
   the intumescent multi-component coating product further comprises a carbon source comprising an aromatic compound and/or tall oil fatty acids present in part A) and/or part B), a reinforced fiber present in part A) and/or part B), an inorganic additive present in part A) and/or part B).
Aspect 21. The intumescent multi-component coating product according to aspect 20, wherein the inorganic additive comprises alumina, magnesium oxide, alumnium hydroxide, magnesium hydroxide and/or inorganic boron compound.
Aspect 22. The intumescent multi-component coating product according to aspect 20, wherein the polymer comprises one or more of the following:
   epoxy resins, acrylic resins, polyurethane, polyurea, polyvinyls, phenolic resins, urea-formaldehyde resins, polyimides, melamine resins, polyester resins and cyanate resins.
Aspect 23. The intumescent multi-component coating product according to aspect 20, wherein the curing agent comprises one or more of amines, amine adducts, polyamides, polyepoxides, polyetheramines and polyols.
Aspect 24. The intumescent multi-component coating product according to aspect 23, wherein the aromatic compound comprises bisphenol compounds and/or an aromatic compound having a long chain hydrocarbyl substituent.
Aspect 25. The intumescent multi-component coating product according to aspect 24, wherein the bisphenol compounds comprises bisphenol A, bisphenol B and/or bisphenol F.
Aspect 26. The intumescent multi-component coating product according to aspect 24, wherein the long chain hydrocarbyl in the aromatic compound having a long chain hydrocarbyl substituent is a long chain hydrocarbyl of 6 to 20 carbon atoms having 1, 2 or 3 double bonds.
Aspect 27. The intumescent multi-component coating product according to aspect 26, wherein the aromatic compound having a long chain hydrocarbyl substituent is substituted at the aromatic ring thereof by at least one functional group comprising hydroxy, carboxy and/or amino.
Aspect 28. The intumescent multi-component coating product according to aspect 24, wherein the aromatic compound having a long chain hydrocarbyl substituent is cardanol.
Aspect 29. The intumescent multi-component coating product according to aspect 20, wherein the foaming agent comprises melamine, melamine derivatives, dicynodiamide and/or urea.
Aspect 30. The intumescent multi-component coating product according to aspect 20, wherein the acid source comprises ammonium polyphosphate, trichloroethyl phosphate, trichloropropyl phosphate, melamine pyrophosphate and/or triphenyl phosphate.
Aspect 31. The intumescent multi-component coating product according to aspect 20, wherein the reinforced fiber comprises mineral fibers, ceramic fibers, glass fibers, carbon fibers and/or basalt fibers.
Aspect 32. The intumescent multi-component coating product according to aspect 20, it further comprises a curing a curing promoter.
Aspect 33. The intumescent multi-component coating product according to anyone of aspects 20 to 32, wherein the a) polymer comprises 10 wt%-40 wt%, based on the total weight of the composition.
Aspect 34. The intumescent multi-component coating product according to anyone of aspects 20 to 32, wherein the b) curing agent comprises 10 wt%-30 wt%, based on the total weight of the composition.
Aspect 35. The intumescent multi-component coating product according to anyone of aspects 20 to 32, wherein the c) carbon source comprises up to 18 wt%, based on the total weight of the composition.
Aspect 36. The intumescent multi-component coating product according to anyone of aspects 20 to 32, wherein the d) foaming agent comprises 1 wt%-10 wt%, based on the total weight of the composition.
Aspect 37. The intumescent multi-component coating product according to anyone of aspects 20 to 32, wherein the e) acid source comprises 5 wt%-30 wt%, based on the total weight of the composition.
Aspect 38. The intumescent multi-component coating product according to anyone of aspects 20 to 32, wherein the f) reinforced fiber comprises up to 5 wt%, based on the total weight of the composition.
Aspect 39. The intumescent multi-component coating product according to anyone of aspects 20 to 32, wherein part A and part B is mixed before use.
Aspect 40. A method for using the intumescent coating composition of anyone of preceding aspects 1 to 20, comprising applying the coating mixture to a substrate.
Aspect 41. A method for using the intumescent multi-component coating product according to anyone of aspects 20 to 32, comprises mixing part A) and part B) to obtain a coating mixture, and then applying the coating mixture to a substrate.
Aspect 42. A substrate coated with the intumescent coating composition of anyone of aspects 1 to 20.
Aspect 43. The substrate according to aspect 42, wherein the substrate is a metal substrate.
Aspect 44. A substrate coated with the intumescent multi-component coating product of anyone of aspect 20-39.
Aspect 45. The substrate according to aspect 44, wherein the substrate is a metal substrate.
Aspect 46. The use of a carbon source in the improvement of an intumescent coating composition, wherein the carbon source comprises aromatic compounds and/or tall oil fatty acids.
Aspect 47. The use according to aspect 46, wherein the aromatic compound comprises bisphenol compounds and/or an aromatic compounds having a long chain hydrocarbyl substituent.
Aspect 48. The use according to aspect 46, wherein the bisphenol compounds comprise bisphenol A, bisphenol B and/or bisphenol F.
Aspect 49. The use according to aspect 46, wherein the long chain hydrocarbyl in the aromatic compound having a long chain hydrocarbyl substituent is a long chain hydrocarbyl of 6 to 20 carbon atoms having 1, 2 or 3 double bonds.
Aspect 50. The use according to aspect 49, wherein the aromatic compound having a long chain hydrocarbyl substituent is substituted at the aromatic core thereof by at least one functional group comprising hydroxy, carboxy and/or amino.
Aspect 51. The use according to aspect 46, wherein the aromatic compound having a long chain hydrocarbyl substituent is cardanol.

## Claims

1. A multi-component intumescent coating product, comprising:
part A) and part B), wherein
part A) comprises a polymer and acid source,
part B) comprises a curing agent and a foaming agent;
the intumescent multi-component coating product further comprises a carbon source comprising tall oil fatty acids present in part A) and/or part B), a reinforced fiber present in part A) and/or part B), and an inorganic additive present in part A) and/or part B).

2. The intumescent multi-component coating product according to claim 1, wherein the inorganic additive comprises alumina, magnesium oxide, aluminium hydroxide, magnesium hydroxide and/or an inorganic boron compound.

3. The intumescent multi-component coating product according to claim 1, wherein the polymer comprises one or more of the following:
epoxy resins, acrylic resins, polyurethanes, polyureas, polyvinyls, phenolic resins, urea-formaldehyde resins, polyimides, melamine resins, polyester resins and cyanate resins.

4. The intumescent multi-component coating product according to claim 1, wherein the curing agent comprises one or more of amines, amine adducts, polyamides, polyepoxides, polyetheramines and polyols.

5. The intumescent multi-component coating product according to claim 1, wherein the foaming agent comprises melamine, melamine derivatives, dicyanodiamide and/or urea.

6. The intumescent multi-component coating product according to claim 1, wherein the acid source comprises ammonium polyphosphate, trichloroethyl phosphate, trichloropropyl phosphate, melamine pyrophosphate and/or triphenyl phosphate.

7. The intumescent multi-component coating product according to claim 1, wherein the reinforced fiber comprises mineral fibers, ceramic fibers, glass fibers, carbon fibers and/or basalt fibers.

8. The intumescent multi-component coating product according to claim 1, further comprising a curing promoter.

9. The intumescent multi-component coating product according to any preceding claim, wherein
a) the polymer comprises 10 wt%-40 wt%, based on the total weight of the composition; or
b) the curing agent comprises 10 wt%-30 wt%, based on the total weight of the composition; or
c) the carbon source comprises up to 18 wt%, based on the total weight of the composition; or
d) the foaming agent comprises 1 wt%-10 wt%, based on the total weight of the composition; or
e) the acid source comprises 5 wt%-30 wt%, based on the total weight of the composition; or
f) the reinforced fiber comprises up to 5 wt%, based on the total weight of the composition.

10. A method for using the intumescent multi-component coating product according to any preceding claim, comprising mixing part A) and part B) to obtain a coating mixture, and then applying the coating mixture to a substrate.

11. A substrate coated with the intumescent multi-component coating product of any one of claims 1 to 9, preferably wherein the substrate is a metal substrate.

12. The use of a carbon source in the improvement of low temperature resistance properties of an intumescent coating composition, wherein the carbon source comprises tall oil fatty acids.
